(19) Europäisches Patentamt
European Patent Office
Office européen des brevets

(11) **EP 4 776 169 A1**

(12) **DEMANDE DE BREVET EUROPEEN**

(43) Date de publication:
**15.07.2026 Bulletin 2026/29**

(21) Numéro de dépôt: **26150713.1**

(22) Date de dépôt: **08.01.2026**

(51) Classification Internationale des Brevets (IPC):
**G06F 21/55** (2013.01)      **H04L 9/40** (2022.01)
**G06N 5/048** (2023.01)

(52) Classification Coopérative des Brevets (CPC):
**H04L 63/1416; G06F 21/554; G06N 3/043;
G06N 3/08; G06N 3/086; G06N 3/126; G06N 5/01;
G06N 5/025; G06N 5/048; G06N 7/01; G06N 7/02;
G06N 7/023; G06N 20/00; G06N 20/20**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **08.01.2025 FR 2500149**

(71) Demandeur: **THALES**
**92190 Meudon (FR)**

(72) Inventeurs:
• **BELFY, Henri**
**31036 TOULOUSE (FR)**
• **LEGAVRE, Simon**
**31036 TOULOUSE (FR)**

(74) Mandataire: **Lavoix**
**2, place d'Estienne d'Orves**
**75441 Paris Cedex 09 (FR)**

(54) **DISPOSITIF ÉLECTRONIQUE ET PROCÉDÉ DE SÉCURISATION D ÉCHANGE(S) DE DONNÉES VIA UN ALGORITHME D'INTELLIGENCE ARTIFICIELLE AU SEIN D'UNE INSTALLATION DE COMMUNICATION, AÉRONEF ET PROGRAMME D ORDINATEUR ASSOCIÉS**

(57) Ce dispositif électronique (25) de sécurisation d'échange(s) de données au sein d'une installation avionique de communication (10) comprend :
- un module (42) d'acquisition d'au moins un message de données ;
- un module (44) de traitement de l'au moins un message via la mise en œuvre d'au moins une fonction parmi une fonction de filtrage du message, une fonction de détection d'un comportement malveillant et une fonction de réaction à un comportement malveillant ;
- un module de restitution (46) pour effectuer au moins une action associée à un résultat obtenu via l'au moins une fonction.

Chaque fonction comporte un ensemble de règle(s) fonctionnelle(s) obtenu via la mise en œuvre d'un algorithme d'intelligence artificielle comportant un arbre de décision à logique floue ou un réseau de neurones à fonction de base radiale ; chaque règle fonctionnelle étant configurée pour associer une valeur de sortie à plusieurs valeurs d'entrée discrétisées.

FIG.1

EP 4 776 169 A1

## Description

La présente invention concerne un dispositif électronique de sécurisation d'échange(s) de données au sein d'une installation électronique de communication ; ainsi qu'un aéronef comprenant une installation électronique de communication et un tel dispositif électronique de sécurisation.

L'invention concerne également un procédé de sécurisation d'échange(s) de données au sein d'une installation électronique de communication, mis en œuvre par un tel dispositif électronique de sécurisation ; ainsi qu'un programme d'ordinateur, comportant des instructions logicielles qui, lorsqu'elles sont exécutées par un ordinateur, mettent en œuvre un tel procédé de sécurisation.

L'invention concerne le domaine de la cyber-sécurité, en particulier dans le domaine avionique.

Celle-ci s'applique notamment à plusieurs types de mesures de sécurité que sont les mécanismes de filtrage ; les mécanismes de détection et prévention d'intrusion réseau, aussi appelés NIDS (de l'anglais *Network Intrusion Detection System)* et NIPS (de l'anglais *Network Intrusion Prevention System) ;* et les mécanismes de détection et prévention d'intrusion locaux à un système, aussi appelés HIDS (de l'anglais *Host-based Intrusion Detection System)* et HIPS (de l'anglais *Host-based Intrusion Prevention System).*

Un IDS (de l'anglais *Intrusion Detection System)* est un système de détection d'intrusion. Celui-ci peut être basé sur un hôte (Host-Based - HIDS) ou sur des éléments réseaux (Network - NIDS).

Concernant le NIDS, il s'agit d'un logiciel conçu pour surveiller et analyser une activité aux interfaces d'un système. Celui-ci compare les activités observées avec des modèles prédéfinis de comportement normaux ou des schémas d'attaques connus et génère une alerte caractérisant les évènements rencontrés. Si une fonction de réaction est associée à ce mécanisme de détection et permet de contenir une attaque (typiquement une fonction de filtrage), on parle alors de NIPS.

Concernant le HIDS, il s'agit d'un logiciel conçu pour surveiller et analyser l'activité d'un seul ordinateur ou d'un système informatique. Le HIDS surveille les événements sur l'ordinateur hôte, compare les activités observées avec des modèles prédéfinis de comportement normaux ou des schémas d'attaques connus et génère une alerte caractérisant les évènements rencontrés. Si une fonction de réaction est associée à ce mécanisme de détection et permet de contenir une attaque, on parle alors de HIPS.

L'article « A comprehensive review of AI based intrusion detection system » de T. Sowmya et E.A. Mary Anita, publié en 2023, compare des travaux existants concernant des moteurs de classification à base d'intelligence artificielle pour des mécanismes de détection d'intrusion. Ceux-ci se basent typiquement sur les algorithmes ou modèles suivants : k plus proches voisins ou k-NN (de l'anglais *k-Nearest Neighbour),* Machine à vecteurs de support ou SVM (de l'anglais *Support Vector Machine),* Bayes naïf ou NB (de l'anglais *Naive Bayes),* Forêt aléatoire ou RF (de l'anglais *Random Forest),* Arbre de décision ou DT (de l'anglais *Decision Tree),* et Descente de gradient stochastique ou SGD (de l'anglais *Stochastic Gradient Descent).*

Ces différents algorithmes ou modèles sont généralement assez précis et/ou performants, mais ne sont pas bien adaptés pour être implémentés dans des dispositifs de sécurisation devant faire l'objet d'une certification.

Pour les dispositifs de sécurisation devant faire l'objet d'une certification, il est connu d'utiliser des ensembles, ou bases, de règle(s) écrites sous forme d'équation(s) de détection, et ces équations sont faites manuellement par un concepteur en cyber-sécurité.

Le but de l'invention est alors de proposer un dispositif électronique et un procédé de sécurisation d'échange(s) de données au sein d'une installation électronique de communication, qui soient plus adaptés pour faire l'objet d'une certification.

A cet effet, l'invention a pour objet un dispositif électronique de sécurisation d'échange(s) de données au sein d'une installation avionique de communication embarquée à bord d'un aéronef, le dispositif de sécurisation étant configuré pour être embarqué à bord de l'aéronef et comprenant :

- un module d'acquisition configuré pour acquérir au moins un message de données au sein de l'installation de communication ;
- un module de traitement configuré pour traiter l'au moins un message acquis via la mise en œuvre d'au moins une fonction choisie parmi le groupe comprenant : une fonction de filtrage du message, une fonction de détection d'un comportement malveillant, et une fonction de réaction à un comportement malveillant ;
- un module de restitution configuré pour effectuer au moins une action associée à un résultat obtenu via la mise en œuvre de l'au moins une fonction et choisie parmi le groupe comprenant : affichage du résultat sur un dispositif d'affichage ; enregistrement du résultat en vue d'une analyse ultérieure ; émission d'une alerte relative au résultat ; et génération d'une instruction de commande d'un système en fonction du résultat ;

chaque fonction comportant un ensemble de règle(s) fonctionnelle(s) obtenu via la mise en œuvre d'un algorithme d'intelligence artificielle choisi parmi un algorithme d'intelligence artificielle comportant un arbre de décision à logique floue et un algorithme d'intelligence artificielle comportant un réseau de neurones à fonction de base radiale, dit réseau RBFN ; chaque règle fonctionnelle étant respectivement une règle de filtrage pour la fonction de filtrage, une règle de détection pour la fonction de détection, et une règle de réaction pour la fonction de réaction ; chaque règle fonctionnelle étant une règle d'association configurée pour associer une valeur de sortie à plusieurs valeurs d'entrée discrétisées.

Avec le dispositif de sécurisation selon l'invention, l'algorithme d'intelligence artificielle mis en œuvre pour obtenir l'ensemble de règle(s) fonctionnelle(s) n'est pas basé sur une approche statistique, mais sur une base de règle(s) d'association apprise préalablement, et permet une vérification des différents paramètres par un auditeur et donc rendre l'ensemble de règle(s) fonctionnelle(s) auditable et certifiable.

Cet algorithme d'intelligence artificielle permet également de rendre l'ensemble de règle(s) fonctionnelle(s) explicable et prédictible.

Au contraire, les techniques précitées d'apprentissage profond (de l'anglais *deep learning)* de l'état de la technique, telles que SVM ou RF, sont basées sur des techniques d'intelligence artificielle boites noires qui permettent d'effectuer la détection souhaitée, mais ne sont pas explicables, ni déterministes.

Par ailleurs, l'article précité de T. Sowmya et E.A. Mary Anita décrit en section « 3.1.2.2 *Fuzzy C means clustering algorithm »* une approche non-supervisée qui permet d'assigner des points de données à un ou plusieurs clusters. L'algorithme attribue des degrés d'appartenance en fonction de la distance entre les centres des clusters et les points de données. Le modèle vise à fournir une meilleure précision et stabilité de la classification lorsqu'il est testé et entraîné avec le jeu de données KDD 99 Cup. L'algorithme est une approche de regroupement flou (de l'anglais *fuzzy clustering),* attribuant chaque échantillon de données à un cluster en fonction d'un score de probabilité. Le principe du regroupement flou pour la détection d'intrusions est d'identifier et de catégoriser les différents types d'attaques. Cet article ne vise pas non plus à fournir un ensemble de règle(s) fonctionnelle(s) explicable et prédictible, où chaque règle fonctionnelle est configurée pour associer une valeur de sortie à plusieurs valeurs d'entrée discrétisées.

Le dispositif de sécurisation selon l'invention est ainsi bien plus adapté que les systèmes NIDS, NIPS, HIDS et HIPS de l'état de la technique pour faire l'objet d'une certification.

Suivant d'autres aspects avantageux de l'invention, le dispositif électronique de sécurisation comprend une ou plusieurs des caractéristiques suivantes, prises isolément ou suivant toutes les combinaisons techniquement possibles :

- l'arbre de décision à logique floue inclut au moins un système d'inférence flou, chaque système d'inférence flou étant configuré pour recevoir en entrée au moins une valeur d'une grandeur relative au message et pour délivrer en sortie une valeur d'évaluation ; pour chaque système d'inférence flou, une correspondance entre entrée(s) et sortie étant établie par une transformation floue des entrées, pour sélectionner la règle fonctionnelle configurée pour associer une valeur de sortie correspondant à plusieurs valeurs d'entrée discrétisées ;
- le réseau RBFN inclut une couche d'entrée de N nœud(s) d'entrée, chaque nœud d'entrée recevant une valeur d'une grandeur relative au message, une couche intermédiaire unique de H neurone(s) et une couche de sortie de S nœud(s) de sortie, chaque nœud de sortie fournissant une valeur d'évaluation ; N, H et S étant des entiers supérieurs ou égaux à 1, chaque neurone de la couche intermédiaire étant caractérisé par une fonction d'activation radiale centrée sur un centre $c_h$ et de rayon $r_h$, h étant un entier compris entre 1 et N ;
- l'algorithme d'intelligence artificielle est entrainé via un apprentissage préliminaire à partir de données d'apprentissage ;

l'apprentissage préliminaire étant de préférence un apprentissage supervisé ;

- l'apprentissage préliminaire de l'arbre de décision à logique floue est effectué via la mise en œuvre d'un algorithme génétique ;
- l'apprentissage préliminaire du réseau RBFN est effectué via la mise en œuvre d'une descente de gradient ; et
- l'apprentissage préliminaire comporte en outre, pour chaque règle fonctionnelle, une indication du nombre d'occurrence(s) de mise en œuvre de ladite règle lors de l'apprentissage préliminaire.

L'invention concerne également un aéronef comprenant une installation électronique de communication et un dispositif électronique de sécurisation d'échange(s) de données au sein de ladite installation de communication, le dispositif de sécurisation étant tel que défini ci-dessus.

L'invention a aussi pour objet un procédé de sécurisation d'échange(s) de données au sein d'une installation avionique de communication embarquée à bord d'un aéronef, le procédé de sécurisation étant mis en œuvre par un dispositif électronique de sécurisation embarqué à bord de l'aéronef et comprenant les étapes suivantes :

- acquérir au moins un message de données au sein de l'installation de communication ;
- traiter l'au moins un message acquis via la mise en œuvre d'au moins une fonction choisie parmi le groupe comprenant : une fonction de filtrage du message, une fonction de détection d'un comportement malveillant, et une fonction de réaction à un comportement malveillant ;

- effectuer au moins une action associée à un résultat obtenu via la mise en œuvre de l'au moins une fonction et choisie parmi le groupe comprenant : affichage du résultat sur un dispositif d'affichage ; enregistrement du résultat en vue d'une analyse ultérieure ; émission d'une alerte relative au résultat ; et génération d'une instruction de commande d'un système en fonction du résultat ;

chaque fonction comportant un ensemble de règle(s) fonctionnelle(s) obtenu via la mise en œuvre d'un algorithme d'intelligence artificielle choisi parmi un algorithme d'intelligence artificielle comportant un arbre de décision à logique floue et un algorithme d'intelligence artificielle comportant un réseau de neurones à base radiale, dit réseau **RBFN** ; chaque règle fonctionnelle étant respectivement une règle de filtrage pour la fonction de filtrage, une règle de détection pour la fonction de détection, et une règle de réaction pour la fonction de réaction ; chaque règle fonctionnelle étant une règle d'association configurée pour associer une valeur de sortie à plusieurs valeurs d'entrée discrétisées.

L'invention concerne également un programme d'ordinateur comportant des instructions logicielles qui, lorsqu'elles sont exécutées par un ordinateur, mettent en œuvre un procédé de sécurisation tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

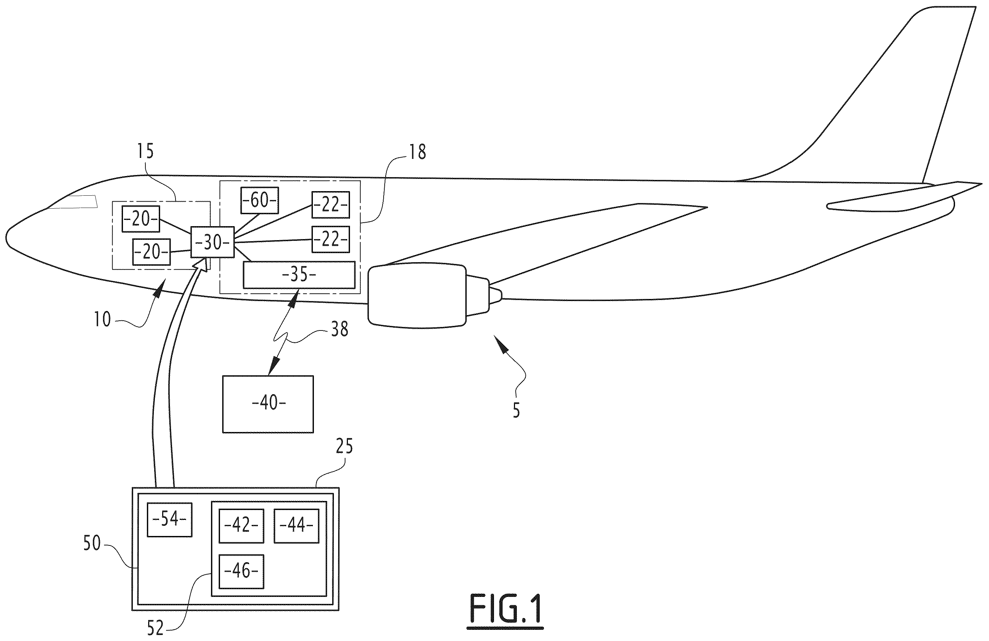

- la figure 1 est une représentation schématique d'un aéronef selon l'invention comprenant une installation de communication compartimentée en un domaine avionique et un domaine ouvert externe au domaine avionique ; l'installation de communication comportant plusieurs systèmes avioniques appartenant au domaine avionique, un ou plusieurs appareils électroniques appartenant au domaine ouvert, un dispositif électronique de sécurisation d'échange(s) de données au sein de l'installation et une passerelle électronique de communication connectée entre le ou les appareils électroniques et les systèmes avioniques, le dispositif de sécurisation étant configuré pour mettre en œuvre un ensemble de règle(s) fonctionnelle(s) obtenu via la mise en œuvre d'un algorithme d'intelligence artificielle ; et
- la figure 2 est une représentation schématique d'un système de supervision de communication résultant d'un autre exemple d'implémentation de l'invention ;
- la figure 3 est une vue schématique représentant des fonctions d'appartenance pour deux paramètres de message respectifs, selon un premier mode de réalisation de l'invention dans lequel l'algorithme d'intelligence artificielle comporte un arbre de décision à logique floue ;
- la figure 4 est une vue schématique représentant une fonction d'appartenance pour une valeur d'évaluation, selon le premier mode de réalisation ; et
- la figure 5 est un organigramme d'un procédé, selon l'invention, de sécurisation d'échange(s) de données au sein de l'installation de communication avionique de la figure 1, le procédé étant mis en œuvre par le dispositif de sécurisation.

Les expressions « sensiblement égal(e) à » et « de l'ordre de » définissent une relation d'égalité à plus ou moins 20%, de préférence à plus ou moins 10%, et de préférence encore à plus ou moins 5%.

Sur la figure 1, un aéronef 5 comprend une installation de communication 10 compartimentée en un domaine avionique 15 et un domaine ouvert 18, externe au domaine avionique 15.

L'installation de communication 10 comporte plusieurs systèmes avioniques 20 appartenant au domaine avionique 15 ; ainsi qu'un ou plusieurs appareils électroniques 22, externes au domaine avionique 15 et appartenant au domaine ouvert 18.

L'installation de communication 10 comporte également un dispositif électronique 25 de sécurisation d'échange(s) de données.

Dans l'exemple de la figure 1, l'installation de communication 10 comporte une passerelle électronique de communication 30 connectée entre le ou les appareils électroniques 22 et les systèmes avioniques 20. Dans l'exemple de la figure 1, l'installation de communication 10 comporte plusieurs appareils électroniques 22, chacun appartenant au domaine ouvert 18. Dans cet exemple de la figure 1, le dispositif de sécurisation 25 est inclus dans la passerelle électronique de communication 30.

En complément, l'installation de communication 10 comprend en outre un serveur de communication 35 communiquant via une liaison de communication 38 avec au moins un équipement électronique 40, externe à l'aéronef 5.

Le domaine avionique 15 est un domaine correspondant à un niveau de sécurité le plus élevé à bord de l'aéronef 5, en particulier le niveau de sécurité requis le plus élevé de l'installation de communication 10 de l'aéronef 5.

Le domaine avionique 15 est alors un domaine pour limiter un risque de perturbation - par au moins une communication avec un appareil ou dispositif électronique externe au domaine avionique 15 - de fonction(s) mise(s) en œuvre par l'au moins un système avionique 20 du domaine avionique 15. Le domaine avionique 15 inclut le ou les systèmes avioniques 20.

Le domaine avionique 15 est typiquement le domaine ACD (de l'anglais *Aircraft Control Domain)* selon la norme ARINC 811 du 20 décembre 2005.

Le domaine ouvert 18 est un domaine auquel correspond un niveau de sécurité moins élevé que le niveau de sécurité du domaine avionique 15. Le domaine ouvert 18 inclut le ou les appareils électroniques 22.

Chaque système avionique 20 est embarqué à bord de l'aéronef 5 et appartient au domaine avionique 15. Chaque système avionique 20 est connu en soi, également appelé calculateur avionique, et est configuré pour mettre en œuvre une ou plusieurs fonctions avioniques respectives.

Chaque système avionique 20 est par exemple choisi parmi le groupe consistant en : un système de gestion du vol, également appelé FMS (de l'anglais *Flight Management System) ;* un système de guidage, ou FG (de l'anglais *Flight Guidance) ;* un système de commandes de vol, ou FCS (de l'anglais *Flight Control System*); un système de positionnement par satellite GNSS (de l'anglais *Global Navigation Satellite System),* tel qu'un système GPS (de l'anglais *Global Positioning System) ;* un système de référence inertielle, également appelé système IRS (de l'anglais *Inertial Reference System) ;* un système d'aide à l'atterrissage ILS (de l'anglais *Instrument Landing System)* ou un système d'aide à l'atterrissage MLS (de l'anglais *Microwave Landing System) ;* un système de prévention de sortie de piste actif, également appelé système ROPS (de l'anglais *Runway Overrun Prevention System) ;* et un radioaltimètre, également noté RA (de l'anglais *RadioAltimeter).*

Chaque appareil électronique 22 appartenant au domaine ouvert 18 ne met pas en œuvre une fonction avionique respective, et ne nécessite alors généralement pas de faire l'objet d'une certification spécifique.

Le dispositif électronique de sécurisation 25 est configuré pour sécuriser les échanges de données au sein de l'installation avionique de communication 10, et comprend un module d'acquisition 42, un module de traitement 44 et un module de restitution 46.

Le dispositif électronique de sécurisation 25 comprend par exemple une unité de traitement d'informations 50 formée typiquement d'une mémoire 52 et d'un processeur 54 associé à la mémoire 52.

Selon cet exemple, le module d'acquisition 42, le module de traitement 44 et le module de restitution 46 sont réalisés chacun sous forme d'un logiciel, ou d'une brique logicielle, exécutable par le processeur 54. La mémoire 52 du dispositif de sécurisation 25 est alors apte à stocker un logiciel d'acquisition, un logiciel de traitement et un logiciel de restitution. Le processeur 54 du dispositif de sécurisation 25 est alors apte à exécuter chacun des logiciels parmi le logiciel d'acquisition, le logiciel de traitement et le logiciel de restitution.

En variante non représentée, le module d'acquisition 42, le module de traitement 44 et le module de restitution 46 sont réalisés chacun sous forme d'un composant logique programmable, tel qu'un FPGA (de l'anglais *Field Programmable Gate Array),* ou encore d'un circuit intégré, tel qu'un ASIC (de l'anglais *Application Specific Integrated Circuit).*

Lorsque le dispositif électronique de sécurisation 25 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comprenant des instructions logicielles.

La passerelle électronique de communication 30, appelée par la suite passerelle de communication 30 ou encore passerelle 30, est en interface entre le domaine ouvert 18 et le domaine avionique 15. Un message de données transmis entre le domaine ouvert 18 et le domaine avionique 15, c'est-à-dire depuis le domaine ouvert 18 vers le domaine avionique 15, ou inversement depuis le domaine avionique 15 vers le domaine ouvert 18, transite alors nécessairement par la passerelle de communication 30.

Le serveur de communication 35 est configuré pour communiquer via la liaison de communication 38 avec l'au moins un équipement électronique externe 40, ledit au moins un équipement électronique externe 40 étant par exemple une station au sol, ou encore un équipement informatique en nuage (de l'anglais *cloud computing).* Le serveur de communication 35 est préférentiellement connecté à la passerelle de communication 30. Le serveur de communication 35 appartient typiquement au domaine ouvert 18.

Le serveur de communication 35 est connu en soi, et comporte notamment un émetteur-récepteur, non représenté, compatible avec la liaison de communication 38. La liaison de communication 38 est typiquement une liaison radioélectrique, c'est-à-dire une liaison par ondes radioélectriques, tel qu'une liaison par satellite. L'émetteur-récepteur est alors un émetteur-récepteur radioélectrique.

L'équipement électronique externe 40 est typiquement connecté à une infrastructure informatique d'un centre de commande opérationnel, également appelé OCC (de l'anglais *Operational Control Center).* L'équipement électronique externe 40 est alors avantageusement configuré pour transmettre des données, comme par exemple un plan de vol de l'aéronef 5 et des informations relatives à l'aéronef 5, telles que sa masse, sa configuration, son équilibrage, ou encore son identifiant.

Le module d'acquisition 42 est configuré pour acquérir au moins un message de données au sein de l'installation de communication 10.

Le module d'acquisition 42 est par exemple configuré pour acquérir, de la part d'un appareil électronique 22 appartenant au domaine ouvert 18, au moins un message de données à destination d'un système avionique 20 respectif, appartenant au domaine avionique 15. L'appareil électronique 22, de la part duquel le message est acquis, est typiquement le serveur de communication 35, si le message est émis depuis l'équipement électronique externe 40.

Le module d'acquisition 42 est par exemple configuré pour acquérir chaque message selon un protocole de communication avionique respectif.

Le protocole de communication avionique est par exemple choisi parmi le groupe consistant en : un protocole conforme à la norme ARINC 702 ; un protocole conforme à la norme ARINC 739 ; un protocole conforme à la norme ARINC 619 ; un protocole conforme à la norme ARINC 429 ; et un protocole conforme à la norme FANS (de l'anglais *Future Air Navigation System)* A associé à l'EUROCAE ED-100.

Les messages sont des messages venant de l'extérieur du dispositif de sécurisation 25, tels que des messages échangés entre le domaine avionique 15 et le domaine ouvert 18.

En complément ou en variante, les messages sont des messages provenant de n'importe quelle source d'information interne à une application logicielle et/ou au matériel qui sont surveillés par le dispositif de sécurisation 25. Les messages sont par exemple des messages provenant d'une ou plusieurs sondes logicielles de l'application logicielle elle-même. En complément ou en variante, les messages sont des messages d'erreur d'un système d'exploitation, ou OS (de l'anglais *Operating System),* d'un système informatique hébergeant le dispositif de sécurisation 25, ledit système informatique formant alors l'unité de traitement d'informations 50.

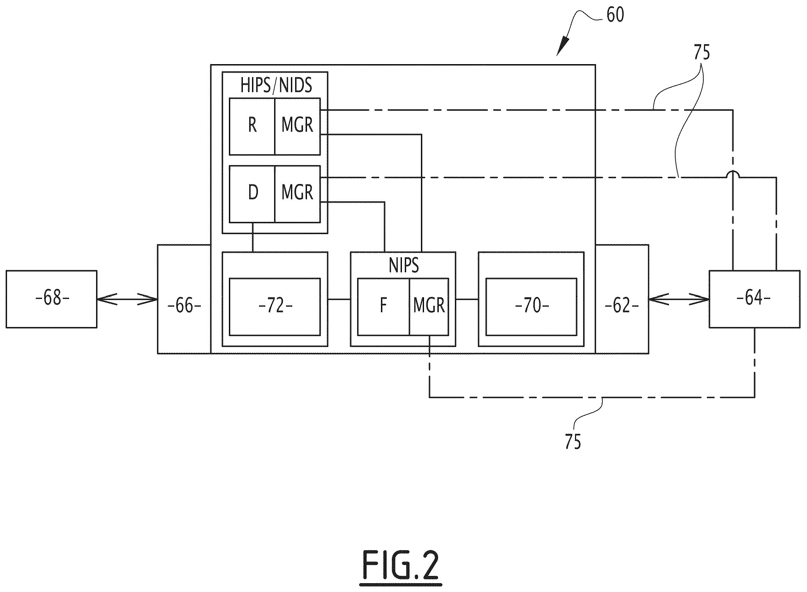

Le module de traitement 44 est configuré pour traiter l'au moins un message acquis via la mise en œuvre d'une fonction F de filtrage du message et/ou d'une fonction D de détection d'un comportement malveillant et/ou d'une fonction R de réaction à un comportement malveillant, les fonctions de filtrage F, de détection D et de réaction R étant illustrées à la figure 2, décrite plus en détail ci-après.

Selon l'invention, chaque fonction de filtrage F, de détection D et/ou de réaction R comporte un ensemble de règle(s) fonctionnelle(s) obtenu via la mise en œuvre d'un algorithme d'intelligence artificielle. Chaque règle fonctionnelle est respectivement une règle de filtrage pour la fonction de filtrage F, une règle de détection pour la fonction de détection D, et une règle de réaction pour la fonction de réaction R. Chaque règle fonctionnelle est une règle d'association configurée pour associer une valeur d'une variable de sortie, aussi appelée valeur de sortie, à plusieurs valeurs discrétisées de variables d'entrée, aussi appelées valeurs d'entrée.

L'algorithme d'intelligence artificielle est préalablement entrainé via un apprentissage préliminaire à partir de données d'apprentissage. L'apprentissage préliminaire est avantageusement un apprentissage supervisé.

En complément facultatif, l'apprentissage préliminaire comporte, pour chaque règle fonctionnelle, une indication du nombre d'occurrence(s) de mise en œuvre de ladite règle lors de l'apprentissage préliminaire.

L'homme du métier comprendra alors que chaque ensemble de règle(s) fonctionnelle(s) est obtenu via une inférence de l'algorithme d'intelligence artificielle, l'inférence étant typiquement effectuée de manière dynamique lors de la mise en œuvre du dispositif de sécurisation 25, et qu'avant cette inférence, l'algorithme d'intelligence artificielle a été entraîné lors de l'apprentissage préliminaire à partir des données d'apprentissage. L'entraînement de l'algorithme d'intelligence artificielle est de préférence effectué uniquement de manière statique.

Le module de restitution 46 est configuré pour effectuer au moins une action associée à un résultat, obtenu via la mise en œuvre de l'au moins une fonction de filtrage F, de détection D et/ou de réaction R, l'action étant choisie parmi l'affichage du résultat sur un dispositif d'affichage, non représenté ; l'enregistrement du résultat en vue d'une analyse ultérieure, le résultat étant par exemple enregistré dans la mémoire 52 ; l'émission d'une alerte relative au résultat ; et la génération d'une instruction de commande d'un système, tel qu'un système avionique 20 respectif, et ceci en fonction du résultat.

Les variables d'entrée prise en compte pour obtenir l'ensemble de règle(s) fonctionnelle(s) sont par exemple des variables correspondant à des informations issues du matériel, et/ou des variables correspondant à des informations issues du système d'exploitation et/ou du logiciel applicatif, et/ou des variables correspondant à des informations issues d'un réseau de communication au sein de l'installation avionique 10.

Les informations issues du matériel et susceptibles de former des variables d'entrée sont typiquement les suivantes :

- erreurs de mémoire : les erreurs de parité ou les erreurs ECC (Error-Correcting Code) sur la RAM peuvent indiquer des problèmes matériels ou des tentatives de corruption de mémoire ;
- défaillances de disques : les erreurs de lecture/écriture fréquentes, les secteurs défectueux croissants, ou les messages SMART (Self-Monitoring, Analysis and Reporting Technology) indiquant une défaillance imminente du disque dur;
- problèmes de Température : des températures anormalement élevées des composants comme le CPU, le GPU ou les disques durs peuvent signaler une surcharge, une défaillance du système de refroidissement ou une attaque entrainant une surconsommation au niveau matériel ;

- variations de tension : des fluctuations ou des anomalies dans les tensions d'alimentation peuvent indiquer un problème électrique ou une manipulation matérielle malveillante ;
- erreurs de contrôleur : les anomalies dans les contrôleurs, tels que les contrôleurs de disque ou les contrôleurs réseau, peuvent signaler des défaillances matérielles ou des attaques visant à désactiver ces composants ;
- pannes de périphériques : les périphériques qui se déconnectent ou fonctionnent de manière intermittente, comme les cartes réseau, les cartes graphiques, ou même les périphériques USB, peuvent être le signe de soucis matériels ou d'une compromission ;
- alertes de diagnostics matériels : les outils de diagnostics matériels intégrés qui rapportent des erreurs fréquentes ou inhabituelles peuvent aussi indiquer des anomalies matérielles ;
- événements anormaux de BIOS/EFI : les modifications non autorisées ou répétées des paramètres du BIOS/EFI, ou des échecs dans la vérification de l'intégrité ou authenticité (secure boot) au démarrage peuvent indiquer des tentatives d'attaque au niveau firmware ;
- anomalies de performances : un fonctionnement anormalement lent ou une utilisation excessive des ressources matérielles sans raison claire peut également signaler un problème matériel ou un malware consommant les ressources ;
- problèmes de performance du réseau : des anomalies dans les composants matériels de réseau (comme les switches, les hubs, les routeurs internes) peuvent indiquer des tentatives d'interception ou de manipulation du trafic réseau ;
- intrusions physiques : détection d'ouverts ou de modifications forcées sur le châssis ou les composants blindés peut indiquer des tentatives d'intrusion physique ;
- logs matériels du processeur : surveillance des messages d'erreur CPU, y compris les violations de privilèges ou les instructions illégales, peut indiquer des activités suspectes ;
- attaques sur les modules TPM (de l'anglais *Trusted Platform Module)* : activité anormale ou erreurs provenant du module TPM, pouvant indiquer des tentatives de contournement des mesures de sécurité matérielle ;
- interruptions anormales d'un bus interne : perturbations ou interruptions inattendues sur les bus de communication interne, tel que PCIe ou SATA, peuvent signaler des tentatives d'intrusion électronique.

Les informations issues du système d'exploitation et/ou du logiciel applicatif et susceptibles de former des variables d'entrée sont typiquement les suivantes :

- modifications non-autorisées de fichiers système : toute modification inattendue de fichiers critiques du système (comme les fichiers système, les exécutables du noyau, les fichiers de configuration, etc.) peut indiquer une compromission ;
- échecs d'authentification répétés : une série d'échecs d'authentification successifs peut signaler une tentative de force brute pour accéder au système ;
- usage anormal de ressources système : utilisation excessive et inhabituelle des ressources système comme le CPU, la RAM, ou les I/O disques peuvent indiquer un malware ou un processus indésirable ;
- processus suspicieux : exécution de processus inattendus, ou de processus masqués qui ne sont pas typiquement présents sur le système peuvent signaler une intrusion ;
- modifications des règles de sécurité : changements non autorisés dans les configurations de pare-feu, des règles SELinux/AppArmor, ou autres politiques de sécurité ;
- création ou suppression inattendue d'utilisateurs : la création ou la suppression inopinée de comptes utilisateurs, ou la modification des privilèges utilisateurs peut indiquer une tentative de prise de contrôle du système ;
- connexions réseau anormales : des connexions sortantes ou entrantes inhabituelles, surtout en provenance ou à destination de ports non standards ou d'emplacements géographiques inattendus ;
- erreurs de services systèmes : échecs répétés ou services se redémarrant fréquemment peut indiquer des tentatives d'exploitation vulnérabilités de services ;
- modifications dans les logs système : modification ou suppression des logs système pour tenter de masquer des actions malveillantes ;
- exécution de Scripts/Programmes/Processus Non Autorisés : logiciels exécutés en arrière-plan sans autorisation peuvent indiquer la présence de malware ou des scripts de contrôle distants ;
- injections de code : tentatives d'injection de code dans des processus légitimes utilisant des techniques comme DLL Injection ou Code Cavitation ;
- activités de tâches planifiées (de l'anglais *Scheduled* Tasks) : surveillance des tâches planifiées pour détecter des ajouts suspects ou des comportements anormaux ;
- anomalies dans les droits d'accès : Modifications inattendues des permissions des fichiers et dossiers critiques ;
- comportements anormaux de systèmes de fichiers : des changements dans les systèmes de fichiers comme l'activité excessive d'écriture/lecture, la corruption de fichiers, ou les fichiers apparus de nulle part ;

- séquences de boot anormales : changements dans la séquence de démarrage ou modifications des configurations de démarrage (comme les partitionnements de démarrage EFI ou MBR) ; et

- anomalies dans des sessions utilisateur : sessions utilisateur ouvertes durant des heures d'inactivité, changements rapides de sessions, ou connexions simultanées inattendues depuis des adresses IP différentes.

Les informations issues du réseau de communication et susceptibles de former des variables d'entrée sont typiquement les suivantes :

- fréquence des trames : surveiller une fréquence anormalement élevée ou basse de transmission des trames sur le réseau ; une fréquence plus élevée que d'habitude peut indiquer un comportement malveillant, comme une attaque par déni de service (DDoS) ou une tentative d'exfiltration de données ; une fréquence anormalement basse peut signaler des problèmes de performance réseau ou de matériel ;

- syntaxe des flux : vérifier si les paquets respectent les protocoles et formats de données attendus ; des anomalies dans la syntaxe des paquets peuvent indiquer la présence de paquets malveillants ou la tentative d'exploiter des vulnérabilités de protocole ;

- temps entre deux trames : détecter des variations anormales dans le temps entre les trames successives ; des temps d'intervalle anormalement courts pourraient indiquer une tentative de surcharge du réseau, tandis que des temps plus longs pourraient signaler des problèmes de latence ou des attaques de suppression de paquets ;

- taille des trames : suivre les anomalies dans la taille des trames transmises ; des trames anormalement grandes ou petites peuvent être le signe de tentatives de fragmentation malveillante, de techniques de tunneling, ou de contournement des systèmes de détection ;

- sémantique des trames : analyser le contenu des trames pour détecter des anomalies dans les données transmises ; par exemple, des requêtes ou réponses qui ne correspondent pas au contexte attendu peuvent indiquer des attaques de type injection de commande ou manipulation des données ;

- ordre des Trames : surveiller l'ordre des trames transmises ; une séquence de trames qui ne correspond pas à l'ordre prévu (indiquant des retransmissions ou des paquets réarrangés) peut signaler une attaque de type *« man-in-the-middle »,* où l'attaquant intercepte et modifie les trames pendant leur transmission.

Les sanctions, ou réactions, susceptibles d'être mis en œuvre en cas de détection d'un comportement malveillant sont typiquement les suivantes :

- blocage d'accès : bloquer les connexions entrantes ou sortantes d'adresses suspectes ou malveillantes, empêchant ainsi l'attaquant d'accéder à l'hôte ;

- interruption de processus : si un processus malveillant ou suspect est détecté, le terminer immédiatement pour reprendre l'activité dans un état de confiance ;

- modification des règles de pare-feu : ajuster dynamiquement les règles du pare-feu pour bloquer des ports ou des protocoles spécifiques associés à une menace ;

- isolation de l'hôte : isoler un hôte compromis du réseau pour éviter la propagation de l'attaque à d'autres systèmes ;

- réduction des privilèges d'accès : si une anomalie est détectée, réduire temporairement les privilèges d'accès d'un utilisateur ou d'un processus, empêchant ainsi des actions potentiellement nuisibles ; et

- journalisation et alerte : enregistrer tous les événements et envoyer des alertes aux administrateurs, permettant une réponse rapide.

L'homme du métier comprendra que les variables d'entrée indiquées ci-dessus sont utilisables aussi bien pour la fonction de filtrage F, que pour la fonction de détection D, ou encore que pour la fonction de réaction R. Les variables d'entrée sont alors chacune utilisables comme entrées respectives d'un système d'inférence floue, avec optionnellement en outre en entrée la sortie d'un autre système d'inférence floue lorsque plusieurs systèmes d'inférence floue sont cascadés au sein d'un arbre de décision à logique floue correspondant (comme décrit plus en détail par la suite), et la variable de sortie de chaque système d'inférence floue est susceptible de contribuer à la fonction de filtrage F et/ou à la fonction de détection D et/ou à la fonction de réaction R.

A titre d'exemple, l'atteinte d'un seuil prédéfini par la variable de sortie d'un système d'inférence floue respectif est utilisable pour rejeter une trame, ou encore bloquer un accès, ceci correspondant à la fonction de filtrage F.

A titre d'exemple complémentaire, l'atteinte du seuil prédéfini par la variable de sortie d'un système d'inférence floue respectif est utilisable pour lancer l'enregistrement d'une journalisation (de l'anglais log), correspondant alors à la fonction de détection D.

À titre d'exemple complémentaire encore, l'atteinte du seuil prédéfini par la variable de sortie d'un système d'inférence floue respectif est utilisable pour redémarrer une partition logicielle et/ou matérielle, correspondant alors à la fonction de réaction R.

L'homme du métier observera aussi que la fonction de réaction R engendre davantage des traitements de fond (arrêt d'un processus, redémarrage de partition), la fonction de filtrage F cible plus l'élément qui transmet l'attaque (la trame attaquante par exemple), et la fonction de détection D est utile notamment pour des aspects d'enregistrement intelligent.

Il est également à noter que des variables de sortie de la fonction de détection D peuvent former des variables d'entrée de la fonction de réaction R ; que les variables de sortie de la fonction de filtrage F peuvent former des variables d'entrée de la fonction de détection D et/ou de la fonction de réaction R ; et/ou encore que les variables de sortie de la fonction de détection D et/ou de la fonction de réaction R peuvent former des variables d'entrée de la fonction de filtrage F.

Sur la figure 2, l'invention est implémentée au sein d'un système 60 de supervision de communication(s) ou d'échange(s) de données comportant des premières interfaces 62, également appelées interfaces de non-confiance (de l'anglais *untrusted),* connectées à un ou plusieurs premiers équipements 64 ; et des deuxièmes interfaces 66, également appelées interfaces de confiance (de l'anglais *trusted),* connectées à un ou plusieurs deuxièmes équipements 68.

Le système de supervision 60 comporte un premier gestionnaire 70 configuré pour gérer les premières interfaces 62, i.e. de non-confiance, et notamment pour récupérer des données potentiellement malveillantes, et un deuxième gestionnaire 72 configuré pour gérer les deuxièmes interfaces 66, i.e. de confiance, et notamment pour transférer des données assainies vers un domaine de confiance, tel que le domaine avionique 15.

A cet effet, le système de supervision 60 comporte la fonction de filtrage F, interconnectée entre le premier gestionnaire 70 et le deuxième gestionnaire 72, afin de filtrer les données récupérées par le premier gestionnaire 70, potentiellement malveillantes, et fournir les données filtrées, i.e. assainies, au deuxième gestionnaire 72 en vue de leur transmission vers le domaine de confiance. La fonction de filtrage F correspond alors à une fonctionnalité de type NIPS. Dans l'exemple de la figure 2, la fonction de filtrage F est associée à un moteur de génération de règles MGR pour générer la ou les règles de filtrage associées à la fonction de filtrage F, celle-ci étant obtenues selon l'invention via la mise en œuvre de l'algorithme d'intelligence artificielle.

En complément, le système de supervision 60 comporte la fonction de détection D, configurée notamment pour détecter des intrusions ou tentatives d'intrusion et/ou la fonction de réaction R, configurée notamment pour réagir à une ou plusieurs intrusions ou tentatives d'intrusion détectées par la fonction de détection D.

La fonction de détection D est basée sur les éléments observés par les autres fonctions du système de supervision 60, et est configurée pour mettre en œuvre la ou les règles de détection, pour déterminer si un ou plusieurs événements malveillants se produisent au sein du système de supervision 60. Dans l'exemple de la figure 2, la fonction de détection D est associée au moteur de génération de règles MGR pour générer la ou les règles de détection associées à la fonction de détection D, celle-ci étant obtenues selon l'invention via la mise en œuvre de l'algorithme d'intelligence artificielle.

La fonction de réaction R est configurée pour mettre en œuvre la ou les règles de réaction, pour appliquer une ou plusieurs sanctions relatives à un comportement observé par la fonction de détection D. Dans l'exemple de la figure 2, la fonction de réaction R est associée au moteur de génération de règles MGR pour générer la ou les règles de réaction associées à la fonction de réaction R, celle-ci étant obtenues selon l'invention via la mise en œuvre de l'algorithme d'intelligence artificielle.

Les fonctions de détection D et de réaction R correspondent alors typiquement à une fonctionnalité de type HIPS et/ou à une fonctionnalité de type NIDS.

Dans l'exemple de la figure 2, pour réaliser l'apprentissage de l'algorithme d'intelligence artificielle mis en œuvre par le moteur de génération de règles MGR, un routeur intelligent, ou une simulation de ce routeur intelligent, ainsi qu'un ou plusieurs équipements réels, ou leur simulation, sont connectés au système de supervision 60 en tant que premiers équipements 64. Le routeur intelligent, ou sa simulation, est alors mis en œuvre selon différents scénarios successifs, à savoir des scénarios nominaux, ainsi que des scénarios d'attaque visant à couvrir tous les cas d'utilisation souhaités ; en indiquant, pour chaque scénario, le comportement attendu à l'algorithme d'intelligence artificielle. Lors de cet apprentissage, le routeur intelligent communique avec chaque moteur de génération de règles R via une liaisons 75 respective, également appelée liaison d'apprentissage.

L'algorithme d'intelligence artificielle est par exemple au format ONNX (de l'anglais *Open Neural Network Exchange),* ce qui permet d'avoir le moteur de génération de règles MGR également au format ONNX. Le format ONNX est un standard ouvert conçu pour représenter des modèles d'apprentissage automatique. Il permet une interopérabilité entre différents outils, frameworks et plateformes d'apprentissage profond. En variante, l'algorithme d'intelligence artificielle est selon un format propriétaire.

Selon un premier mode de réalisation de l'invention, l'algorithme d'intelligence artificielle mis en œuvre pour obtenir l'ensemble de règle(s) fonctionnelle(s) comporte un arbre de décision à logique floue, également appelé GFT (de l'anglais *Genetic Fuzzy Tree).* L'arbre de décision à logique floue présente l'avantage de rendre l'ensemble de règle(s) fonctionnelle(s) explicable et prédictible.

L'arbre de décision à logique floue inclut au moins un système d'inférence flou, et chaque système d'inférence flou est configuré pour recevoir en entrée au moins une valeur d'une grandeur relative au message et pour délivrer en sortie une valeur d'évaluation. Pour chaque système d'inférence flou, une correspondance entre entrée(s) et sortie est établie par une transformation floue des entrées, pour sélectionner la règle fonctionnelle, également appelée règle GFT, configurée pour associer une valeur de sortie correspondant à plusieurs valeurs d'entrée discrétisées.

L'apprentissage préliminaire de l'arbre de décision à logique floue est effectué via la mise en œuvre d'un algorithme génétique.

Chaque système d'inférence floue est caractérisé par trois phases successives :

- une première phase, dite de conversion en valeurs floues, ou de génération floue, ou encore de flouification (de l'anglais *fuzzification)* correspondant au processus de conversion de valeurs précises en valeurs floues, en les associant à des ensembles flous à l'aide de fonctions d'appartenance ;
- une deuxième phase, dite d'inférence, ou de mise en œuvre du moteur d'inférence, lors de laquelle une ou plusieurs règles sont appliquées sur des caractéristiques, ou adjectifs, représentant les entrées (opérateurs flous) pour créer ainsi de nouvelles caractéristiques, ou nouveaux adjectifs, images desdites règles ; et
- une troisième phase, dite de conversion en valeurs précises, ou de résolution floue, ou encore de déflouification (de l'anglais *defuzzification)* lors de laquelle une décision floue, typiquement avec une valeur comprise entre 0 % et 100 %, est déduite des valeurs des nouveaux adjectifs inférés par les règles.

Un exemple d'obtention d'une règle floue va être à présent décrit pour un cas d'utilisation associé à un pare-feu informatique (de l'anglais *firewall).*

Le but de la règle floue est d'estimer un niveau d'attaque DDOS, en tant que valeur d'évaluation, c'est-à-dire en tant que variable de sortie de la règle floue, à partir de deux grandeurs, ou paramètres, relatives au message de données, formant les variables d'entrée de la règle floue. Pour cet exemple, les grandeurs relatives au message sont une fréquence d'envoi d'une trame de données et une taille de la trame de données envoyée.

Optionnellement, un prétraitement de normalisation est effectué sur les données d'entrée, afin de les normaliser, par exemple entre 0 et 1. Le prétraitement de normalisation de la taille consiste alors typiquement à diviser une taille courante de la trame par une taille maximale prédéfinie, telle que 8192 octets, pour obtenir une taille normalisée comprise entre 0 et 1. De manière analogue, le prétraitement de normalisation de la fréquence consiste typiquement à diviser une fréquence courante par une fréquence maximale prédéfinie, telle que 1 kHz, pour obtenir une fréquence normalisée comprise entre 0 et 1.

Dans l'exemple précité, pour la première phase, les entrées sont par exemple de la forme {Fréquence, Taille} = {0,2 ; 0,5}.

Le système d'inférence floue va mesurer l'appartenance de chacune de ces deux variables, aux adjectifs d'entrée : Fréquence : {FAIBLE, MOYEN, FORT} ; et Taille : {FAIBLE, MOYEN, FORT}.

Les fonctions d'appartenance à ces adjectifs sont par exemple des fonctions triangulaires qualifiées par leurs centres, et s'étendant chacune du centre précédent au centre suivant. Cela permet d'avoir, conformément à un procédé stochastique, la somme de toutes les fonctions d'appartenance égale à 1 pour une valeur fixe en abscisse donnée.

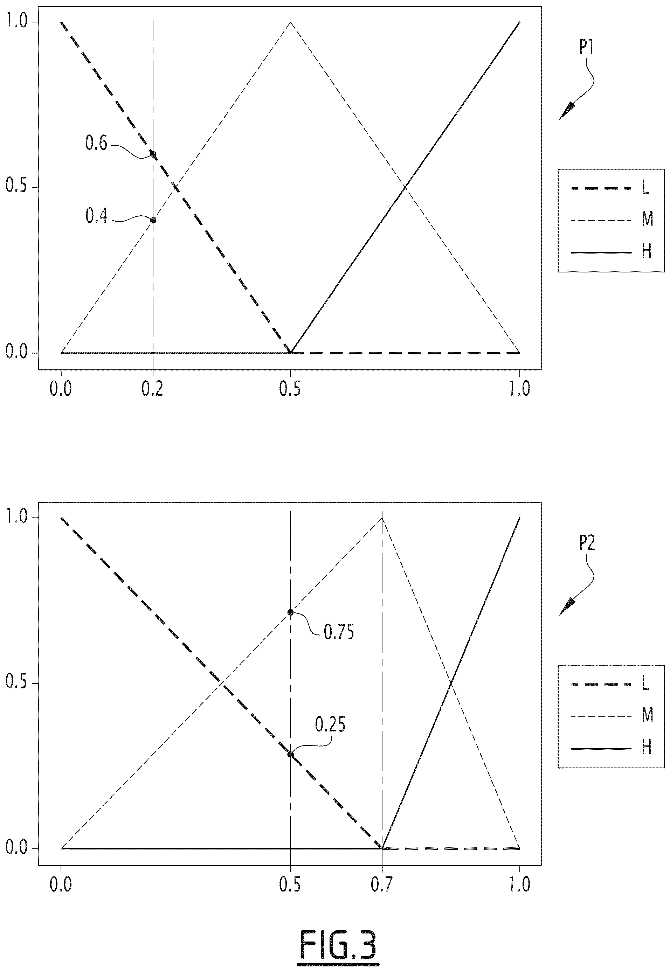

Les fonctions d'appartenance de cet exemple sont alors représentées sur la figure 3, où la vue P1, pour premier paramètre P1, correspond à la Fréquence, et respectivement la vue P2, pour deuxième paramètre P2, correspond à la Taille. Dans cet exemple, les centres des fonctions d'appartenance pour la Fréquence sont alors {0 ; 0,5 ; 1}, et ceux des fonctions d'appartenance pour la Taille sont {0 ; 0,7 ; 1}. Sur la figure 3, l'adjectif FAIBLE correspond à la lettre L (de l'anglais *Low),* l'adjectif MOYEN correspond à la lettre M (de l'anglais *Medium),* et l'adjectif FORT correspond à la lettre H (de l'anglais *High*).

La première phase de génération floue permet alors de qualifier, selon plusieurs adjectifs, la ou les variables d'entrée.

Dans l'exemple, la fonction associée F est la suivante : F : réel → triplet dans $[0 ; 1]^3$, avec :

F : (Fréquence : 0,2) → {FAIBLE : 60%, MOYEN : 40%, FORT : 0%}
F : (Taille : 0,5) → {FAIBLE : 25%, MOYEN : 75%, FORT : 0%}

Lors de la deuxième phase d'inférence, les règles permettent d'inférer appartenance aux adjectifs pour qualifier la variable de sortie, à partir des adjectifs associés aux variables d'entrée. Le moteur d'inférence prend alors en entrée la sortie de la première phase de génération floue, c'est-à-dire la qualification des variables d'entrée initiales.

Dans l'exemple, l'entrée du moteur d'inférence est alors : Fréquence {FAIBLE : 60%, MOYEN : 40%, FORT : 0%} et Taille {FAIBLE : 25%, MOYEN : 75%, FORT : 0%}.

Comme il y a trois adjectifs qualifiant chacune des deux variables d'entrée, cela donne dans cette exemple neuf combinaisons différentes, soit neuf règles.

Le moteur d'inférence est configuré à partir desdites règles.

Dans l'exemple, ces neuf règles unitaires sont supposées par exemple les suivantes :

1. SI {Frequence} FAIBLE & {Taille} FAIBLE, ALORS {NIVEAU DDOS} TRES_TRES_FAIBLE
2. SI {Frequence} FAIBLE & {Taille} MOYEN, ALORS {NIVEAU DDOS} TRES_FAIBLE
3. SI {Frequence} FORT & {Taille} FAIBLE, ALORS {NIVEAU DDOS} FAIBLE
4. SI {Frequence} FAIBLE & {Taille} FORT, ALORS {NIVEAU DDOS} TRES_TRES_MOYEN
5. SI {Frequence} MOYEN & {Taille} FAIBLE, ALORS {NIVEAU DDOS} TRES_MOYEN
6. SI {Frequence} MOYEN& {Taille} MOYEN, ALORS {NIVEAU DDOS} MOYEN
7. SI {Frequence} MOYEN& {Taille} FORT, ALORS {NIVEAU DDOS} FORT
8. SI {Frequence} FORT & {Taille} MOYEN, ALORS {NIVEAU DDOS} TRES_FORT
9. SI {Frequence} FORT & {Taille} FORT, ALORS {NIVEAU DDOS} TRES_TRES_FORT

Dans cet exemple, seul l'opérateur logique ET (de l'anglais AND), symbolisé par le signe & est utilisé pour des raisons de simplification, et est interprété comme l'opérateur produit.

Les neuf règles précédentes se traduisent alors mathématiquement sous la forme suivante :

1.

$$NIVEAU\_DDOS\_TRES\_TRES\_FAIBLE = Frequence\_FAIBLE * Taille\_FAIBLE$$

2.

$$NIVEAU\_DDOS\_TRES\_FAIBLE = Frequence\_FAIBLE * Taille\_MOYEN$$

3.

$$NIVEAU\_DDOS\_FAIBLE = Frequence\_FORT * Taille\_FAIBLE$$

4.

$$NIVEAU\_DDOS\_TRES\_TRES\_MOYEN = Frequence\_FAIBLE * Taille\_FORT$$

5.

$$NIVEAU\_DDOS\_TRES\_MOYEN = Frequence\_MOYEN * Taille\_FAIBLE$$

6.

$$NIVEAU\_DDOS\_MOYEN = Frequence\_MOYEN * Taille\_MOYEN$$

7.

$$NIVEAU\_DDOS\_FORT = Frequence\_MOYEN * Taille\_FORT$$

8.

$$NIVEAU\_DDOS\_TRES\_FORT = Frequence\_FORT * Taille\_MOYEN$$

9.

$$NIVEAU\_DDOS\_TRES\_TRES\_FORT = Frequence\_FORT * Taille\_FORT$$

Suite à la phase d'inférence, on obtient alors les adjectifs induits par les règles, ainsi que l'appartenance de la variable de sortie à ces derniers.

Dans l'exemple, pour la variable de sortie NIVEAU_DDOS, on obtient alors :

```
NIVEAU_DDOS = {
TRES_TRES_FAIBLE        : 0,6*0,25    = 0,15
TRES_FAIBLE             : 0,6*0,75    = 0,45
FAIBLE                  : 0,0*0,25    = 0
TRES_TRES_MOYEN         : 0,6*0,0     = 0
TRES_MOYEN              : 0,4*0,25    = 0,1
MOYEN                   : 0,4*0,75    = 0,3
FORT                    : 0,4*0,0     = 0
TRES_FORT               : 0,0*0,75    = 0
TRES_TRES_FORT          : 0,0*0,0     = 0
}
```

Lors de la troisième phase de résolution floue, les entrées de cette façon constituée de l'appartenance de la variable de sortie aux adjectifs induits par les règles du moteur d'inférence. Dans l'exemple les adjectifs sont les suivants : TRES_TRES_FAIBLE, TRES_FAIBLE, FAIBLE, TRES_TRES_MOYEN, TRES_MOYEN, MOYEN, FORT, TRES_FORT, TRES_TRES_FORT, et ils qualifient la variable de sortie NIVEAU_DDOS.

Les fonctions d'appartenance à ces adjectifs sont par exemple des fonctions triangulaires qualifiées par leurs centres, et s'étendant chacune du centre précédent au centre suivant.

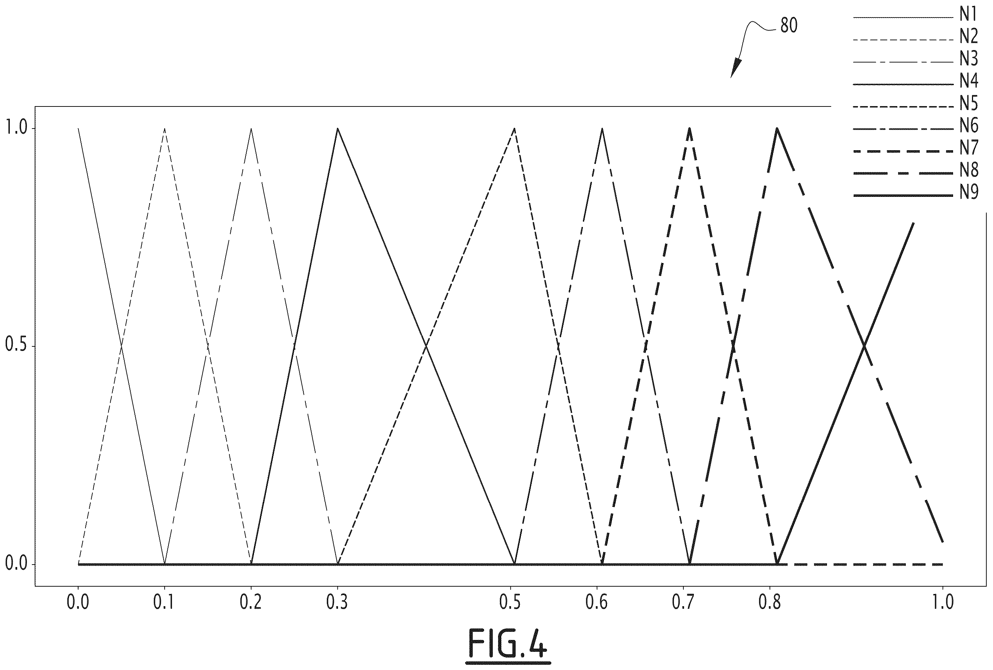

Les fonctions d'appartenance de cet exemple sont alors représentées sur la figure 4, où la vue 80 montre les neuf fonctions d'appartenance pour chacun des neufs adjectifs précités, correspondant à neuf niveaux successifs, référencés N1 à N9 sur la figure 4. Un premier niveau N1 correspond alors à l'adjectif TRES _TRES_FAIBLE, puis un deuxième niveau N2 à TRES_FAIBLE, un troisième niveau N3 à FAIBLE, un quatrième niveau N4 à TRES_TRES_MOYEN, un cinquième niveau N5 à TRES_MOYEN, un sixième niveau N6 à MOYEN, un septième niveau N7 à FORT. Dans l'exemple de la figure 4, les centres des neufs fonctions d'appartenance sont les suivants : {0; 0,1; 0,2; 0,3; 0,5; 0,6; 0,7; 0,8; 1}.

Pour calculer la valeur de sortie finale du système d'inférence floue, la méthode du centre de gravité est par exemple utilisée, selon les équations suivantes :

$$Sortie = \frac{\sum_{règles}(poids_{règle} * Aireappartenance_{règle})}{\sum_{règles}(Aireappartenance_{règle})}$$

$$\approx \frac{(0*0,15) + (0,1*0,45) + (0,2*0) + (0,3*0) + (0,5*0,1) + (0,6*0,3) + (0,7*0) + (0,8*0) + (1*0)}{0,15 + 0,45 + 0 + 0 + 0,1 + 0,3 + 0 + 0 + 0}$$

$$\approx \frac{0,045 + \ 0,05 + \ 0,18}{1}$$

$$\approx \mathbf{0,275}$$

$$\approx \mathbf{27,5}\%$$

La troisième phase de résolution floue revient alors à déduire la valeur de la variable de sortie en fonction de sa caractérisation sous forme d'adjectifs, et de leur fonction d'appartenance sous-jacente, et il alors d'une décision déterministe au sein d'une description floue.

Dans l'exemple, la valeur obtenue pour le niveau d'attaque DDOS correspondant à la variable de sortie NIVEAU_DDOS est alors estimée égale à 27,5%, et cette valeur estimée est alors utilisée par le module de restitution 46 pour effectuer une action, telle que par exemple lancer une réaction de sécurité.

L'homme du métier observera que l'apprentissage du système d'inférence floue revient alors à faire apprendre les centres des fonctions d'appartenance pour la première phase de génération floue pour caractériser les entrées par les adjectifs, à faire apprendre les centres des fonctions d'appartenance pour la troisième phase de résolution floue pour estimer une valeur de sortie à partir des adjectifs induits par les règles, et à faire apprendre les meilleures règles pour le moteur d'inférence.

Autrement dit, dans l'exemple précédent, les éléments appris lors de l'apprentissage sont présentées ci-après de manière soulignée, et sont donc les centres des fonctions d'appartenance, soit pour la fréquence : {0 ; 0,5; 1}, pour la taille : {0 ; 0,7 ; 1} et pour le niveau DDOS : {0 ; 0,1 ; 0,2 ; 0,3; 0,5; 0,6 ; 0,7 ; 0,8 ; 1}, ainsi que la base de règles suivante :

   1. SI {Frequence} FAIBLE & {Taille} FAIBLE, ALORS {NIVEAU DDOS} TRES TRES FAIBLE
   2. SI {Frequence} FAIBLE & {Taille} MOYEN, ALORS {NIVEAU DDOS} TRES FAIBLE

3. SI {Frequence} <u>FORT</u> & {Taille} <u>FAIBLE</u>, ALORS {NIVEAU DDOS} <u>FAIBLE</u>

4. SI {Frequence} <u>FAIBLE</u> & {Taille} <u>FORT</u>, ALORS {NIVEAU DDOS} <u>TRES TRES MOYEN</u>

5. SI {Frequence} <u>MOYEN</u> & {Taille} <u>FAIBLE</u>, ALORS {NIVEAU DDOS} <u>TRES MOYEN</u>

6. SI {Frequence} <u>MOYEN</u>& {Taille} <u>MOYEN</u>, ALORS {NIVEAU DDOS} <u>MOYEN</u>

7. SI {Frequence} <u>MOYEN</u>& {Taille} <u>FORT</u>, ALORS {NIVEAU DDOS} <u>FORT</u>

8. SI {Frequence} <u>FORT</u> & {Taille} <u>MOYEN</u>, ALORS {NIVEAU DDOS} <u>TRES FORT</u>

9. SI {Frequence} <u>FORT</u> & {Taille} <u>FORT</u>, ALORS {NIVEAU DDOS} <u>TRES TRES FORT</u>

Ces éléments appris, tels que les centres des fonctions d'appartenance et la base de règles, sont alors typiquement enregistrées dans une base de données associée au moteur de génération de règles, pour être ensuite exécutés lors de l'inférence de l'algorithme d'intelligence artificielle.

L'exemple précédent est relativement simple, et l'homme du métier comprendra que l'invention permet de créer des arbres de décision floue en enchaînant plusieurs systèmes d'inférence floue de manière imbriquée, afin de créer une intelligence plus complexe. Les systèmes d'inférence floue sont notamment susceptibles d'être interconnectés par couches de profondeur, pour accroître le niveau d'intelligence de l'algorithme d'intelligence artificielle, avec notamment une ou plusieurs variables intermédiaires entre deux systèmes d'inférence floue successifs.

Selon un deuxième mode de réalisation de l'invention, l'algorithme d'intelligence artificielle mis en œuvre pour obtenir l'ensemble de règle(s) fonctionnelle(s) comporte un réseau de neurones à fonction de base radiale, ou RBFN (de l'anglais *Radial Based Function Network),* appelé réseau RBFN par la suite. Le réseau RBFN présente également l'avantage de rendre l'ensemble de règle(s) fonctionnelle(s) explicable et prédictible, ou au moins de simuler le comportement d'un arbre de décision à logique floue.

Le réseau RBFN inclut une couche d'entrée de N nœud(s) d'entrée, chaque nœud d'entrée recevant une valeur d'une grandeur relative au message, une couche intermédiaire unique de H neurone(s) et une couche de sortie de S nœud(s) de sortie, chaque nœud de sortie fournissant une valeur d'évaluation ; N, H et S étant des entiers supérieurs ou égaux à 1. Chaque neurone de la couche intermédiaire est caractérisé par une fonction d'activation radiale centrée sur un centre $c_h$ et de rayon $r_h$, h étant un entier compris entre 1 et N.

L'apprentissage préliminaire du réseau RBFN est effectué via la mise en œuvre d'une descente de gradient.

Pour la mise en œuvre de l'invention selon le deuxième mode de réalisation, le réseau RBFN est par exemple transformé en un système d'inférence floue via une méthode de transformation telle que décrite dans la demande FR 24 12499 déposée le 15 novembre 2024.

La méthode décrite dans cette demande permet notamment de concevoir un réseau RBFN en respectant quelques contraintes d'architecture moderne, puis de transformer le réseau RBFN en une variante floue du RBFN, également appelée FRBFN (de l'anglais *Fuzzy Radial Basis Function Network),* afin d'être équivalent fonctionnellement à un arbre de décision à logique floue, qui lui-même convertible vers une fonction polynomiale.

Cette transformation du réseau RBFN en réseau FRBFN comporte une identification de règles correspondant à la deuxième phase précitée lors de la génération d'un système d'inférence floue, cette identification de règles résultant de l'élagage de connexion d'une couche du réseau RBFN.

L'homme du métier observera également que l'équivalence de la base de règles GFT résulte de la présence ou non d'un lien entre les neurones à base radiale.

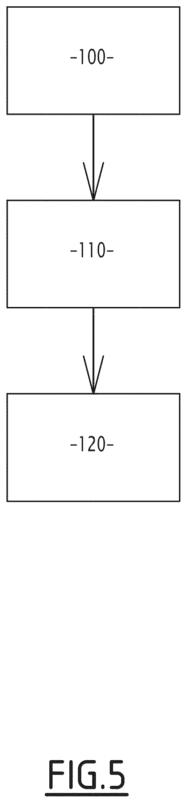

Le fonctionnement du dispositif électronique de sécurisation 25 va désormais être expliqué, notamment à l'aide de la figure 5 représentant un organigramme du procédé, selon l'invention, de sécurisation d'échange(s) de données au sein de l'installation avionique de communication 10 embarquée à bord de l'aéronef 5.

Lors d'une étape initiale 100, le dispositif électronique de sécurisation 25 acquiert, via son module d'acquisition 42, un ou plusieurs messages de données au sein de l'installation de communication 10.

À l'issue de l'étape d'acquisition 100, le dispositif électronique de sécurisation 25 traite, via son module de traitement 44 et lors d'une étape suivante 110 de traitement, l'au moins un message acquis lors de l'étape d'acquisition 100.

Le module de traitement 44 traite chaque message acquis via la mise en œuvre de la fonction de filtrage F et/ou de la fonction de détection D et/ou de la fonction de réaction R. Le type de fonction mise en œuvre pour le traitement de chaque message acquis dépend notamment d'un type souhaité de protection à mettre en œuvre, par exemple parmi NIPS, HIPS et NIDS.

Dans l'exemple de la figure 2, le module de traitement 44 mais par exemple en œuvre la fonction de filtrage F pour la protection NIPS, et/ou la fonction de détection D et la fonction de réaction R pour la protection HIPS ou NIDS.

Selon l'invention, lors de l'étape de traitement 110, chaque fonction F, D, R mise en œuvre comporte un ensemble de règle(s) fonctionnelle(s) respectif associé, qui est obtenu via l'inférence de l'algorithme d'intelligence artificielle. Selon le premier mode de réalisation, l'algorithme d'intelligence artificielle comporte l'arbre de décision à logique floue. Selon le deuxième mode de réalisation, l'algorithme d'intelligence artificielle comporte le réseau de neurones à base radiale, dit réseau RBFN.

À l'issue de l'étape de traitement 110, le dispositif électronique de sécurisation 25 effectue, via son module de restitution 46 et lors d'une étape suivante 120 de restitution, au moins une action associée au résultat obtenu via la mise en œuvre de la fonction de filtrage F et/ou de la fonction de détection D et/ou de la fonction de réaction R.

L'action effectuée est par exemple l'affichage du résultat sur le dispositif d'affichage, ou l'enregistrement du résultat en vue d'une analyse ultérieure, ou l'émission d'une alerte relative au résultat, ou encore la génération en fonction du résultat d'une instruction de commande d'un système respectif, tel qu'un système avionique 20 respectif.

À l'issue de l'étape de restitution 120, le dispositif électronique de sécurisation 25 retourne typiquement à l'étape d'acquisition 100 pour acquérir un ou plusieurs nouveaux messages de données au sein de l'installation de communication 10.

Ainsi, avec le dispositif électronique de sécurisation 25 selon l'invention, l'algorithme d'intelligence artificielle permet de générer plus efficacement l'ensemble de règle(s) fonctionnelle(s) respectif à mettre en œuvre pour effectuer chaque fonction de traitement respective parmi la fonction F de filtrage du message, la fonction D de détection d'un comportement malveillant, et la fonction R de réaction à un comportement malveillant, tout en permettant de rendre chaque ensemble de règle(s) fonctionnelle(s) explicable et prédictible. Cela permet alors de rendre chaque ensemble de règle(s) fonctionnelle(s) ou auditable et certifiable dans un contexte avionique.

On conçoit ainsi que le dispositif électronique de sécurisation 25 et le procédé de sécurisation selon l'invention sont plus adaptés que les dispositifs et procédés de sécurisation de l'état de la technique pour faire l'objet d'une certification avionique.

**Revendications**

1. Dispositif électronique (25) de sécurisation d'échange(s) de données au sein d'une installation avionique de communication (10) embarquée à bord d'un aéronef (5), le dispositif de sécurisation (25) étant configuré pour être embarqué à bord de l'aéronef (5) et comprenant :

   - un module d'acquisition (42) configuré pour acquérir au moins un message de données au sein de l'installation de communication (10) ;
   - un module de traitement (44) configuré pour traiter l'au moins un message acquis via la mise en œuvre d'au moins une fonction choisie parmi le groupe comprenant : une fonction (F) de filtrage du message, une fonction (D) de détection d'un comportement malveillant, et une fonction (R) de réaction à un comportement malveillant ;
   - un module de restitution (46) configuré pour effectuer au moins une action associée à un résultat obtenu via la mise en œuvre de l'au moins une fonction (F, D, R) et choisie parmi le groupe comprenant : affichage du résultat sur un dispositif d'affichage ; enregistrement du résultat en vue d'une analyse ultérieure ; émission d'une alerte relative au résultat ; et génération d'une instruction de commande d'un système (20) en fonction du résultat ;
   **caractérisé en ce que** chaque fonction (F, D, R) comporte un ensemble de règle(s) fonctionnelle(s) obtenu via la mise en œuvre d'un algorithme d'intelligence artificielle comportant un arbre de décision à logique floue ; chaque règle fonctionnelle étant respectivement une règle de filtrage pour la fonction de filtrage (F), une règle de détection pour la fonction de détection (D), et une règle de réaction pour la fonction de réaction (R) ; chaque règle fonctionnelle étant une règle d'association configurée pour associer une valeur de sortie à plusieurs valeurs d'entrée discrétisées ;
   l'arbre de décision à logique floue incluant au moins un système d'inférence flou, chaque système d'inférence flou étant configuré pour recevoir en entrée au moins une valeur d'une grandeur relative au message et pour délivrer en sortie une valeur d'évaluation ; pour chaque système d'inférence flou, une correspondance entre entrée(s) et sortie étant établie par une transformation floue des entrées, pour sélectionner la règle fonctionnelle configurée pour associer une valeur de sortie correspondant à plusieurs valeurs d'entrée discrétisées.

2. Dispositif (25) selon la revendication 1, dans lequel l'algorithme d'intelligence artificielle est entrainé via un apprentissage préliminaire à partir de données d'apprentissage.

3. Dispositif (25) selon la revendication 2, dans lequel l'apprentissage préliminaire est un apprentissage supervisé.

4. Dispositif (25) selon la revendication 2 ou 3, dans lequel l'apprentissage préliminaire de l'arbre de décision à logique floue est effectué via la mise en œuvre d'un algorithme génétique.

5. Dispositif (25) selon l'une quelconque des revendications 2 à 4, dans lequel l'apprentissage préliminaire comporte en outre, pour chaque règle fonctionnelle, une indication du nombre d'occurrence(s) de mise en œuvre de ladite règle lors de l'apprentissage préliminaire.

**6.** Aéronef (5) comprenant une installation avionique de communication (10) et un dispositif électronique (25) de sécurisation d'échange(s) de données au sein de ladite installation de communication (10), le dispositif de sécurisation (25) étant selon l'une quelconque des revendications précédentes.

**7.** Procédé de sécurisation d'échange(s) de données au sein d'une installation avionique de communication (10) embarquée à bord d'un aéronef, le procédé de sécurisation étant mis en œuvre par un dispositif électronique de sécurisation (25) embarqué à bord de l'aéronef (5) et comprenant les étapes suivantes :

- acquérir (100) au moins un message de données au sein de l'installation de communication (10) ;
- traiter (110) l'au moins un message acquis via la mise en œuvre d'au moins une fonction choisie parmi le groupe comprenant : une fonction (F) de filtrage du message, une fonction (D) de détection d'un comportement malveillant, et une fonction (R) de réaction à un comportement malveillant ;
- effectuer (120) au moins une action associée à un résultat obtenu via la mise en œuvre de l'au moins une fonction (F, D, R) et choisie parmi le groupe comprenant : affichage du résultat sur un dispositif d'affichage ; enregistrement du résultat en vue d'une analyse ultérieure ; émission d'une alerte relative au résultat ; et génération d'une instruction de commande d'un système (20) en fonction du résultat ;

**caractérisé en ce que** chaque fonction (F, D, R) comporte un ensemble de règle(s) fonctionnelle(s) obtenu via la mise en œuvre d'un algorithme d'intelligence artificielle comportant un arbre de décision à logique floue ; chaque règle fonctionnelle étant respectivement une règle de filtrage pour la fonction de filtrage (F), une règle de détection pour la fonction de détection (D), et une règle de réaction pour la fonction de réaction (R) ; chaque règle fonctionnelle étant une règle d'association configurée pour associer une valeur de sortie à plusieurs valeurs d'entrée discrétisées ;

l'arbre de décision à logique floue incluant au moins un système d'inférence flou, chaque système d'inférence flou étant configuré pour recevoir en entrée au moins une valeur d'une grandeur relative au message et pour délivrer en sortie une valeur d'évaluation ; pour chaque système d'inférence flou, une correspondance entre entrée(s) et sortie étant établie par une transformation floue des entrées, pour sélectionner la règle fonctionnelle configurée pour associer une valeur de sortie correspondant à plusieurs valeurs d'entrée discrétisées.

**8.** Procédé selon la revendication 7, dans lequel l'algorithme d'intelligence artificielle est entrainé via un apprentissage préliminaire à partir de données d'apprentissage.

**9.** Procédé selon la revendication 8, dans lequel l'apprentissage préliminaire est un apprentissage supervisé.

**10.** Procédé selon la revendication 8 ou 9, dans lequel l'apprentissage préliminaire de l'arbre de décision à logique floue est effectué via la mise en œuvre d'un algorithme génétique.

**11.** Procédé selon l'une quelconque des revendications 8 à 10, dans lequel l'apprentissage préliminaire comporte en outre, pour chaque règle fonctionnelle, une indication du nombre d'occurrence(s) de mise en œuvre de ladite règle lors de l'apprentissage préliminaire.

**12.** Programme d'ordinateur, comportant des instructions logicielles qui, lorsqu'elles sont exécutées par un ordinateur, mettent en œuvre un procédé selon la revendication précédente.

FIG.1

FIG.2

FIG.3

FIG.4

-100-

-110-

-120-

# FIG.5

Europäisches
Patentamt

European
Patent Office

Office européen
des brevets

# RAPPORT DE RECHERCHE EUROPEENNE

**Numéro de la demande**

EP 26 15 0713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | GIL CASALS SILVIA ET AL: "Generic and autonomous system for airborne networks cyber-threat detection", 2013 IEEE/AIAA 32ND DIGITAL AVIONICS SYSTEMS CONFERENCE (DASC), IEEE, 5 octobre 2013 (2013-10-05), XP032553294, ISSN: 2155-7195, DOI: 10.1109/DASC.2013.6712578 [extrait le 2014-01-14] * abrégé * * Abstract * * Page 4A4-1, section "Introduction" Page 4A4-3, section "Netwok-Level Threats" Page 4A4-3, section "Intrusion Detection Systems (IDS)" Page 4A4-4, section "Original SWM Principles" Page 4A4-5, section "Traffic Capture" Page 4A4-6, section "The Observation Window" Page 4A4-7, section "Traffic Characterization Step" Page 4A4-9, section "Leaning and Anomaly Dectection Step" * * figure 6 * ----- -/-- | 1-12 | INV. G06F21/55 H04L9/40 G06N5/048 |
| | | | **DOMAINES TECHNIQUES RECHERCHES (IPC)** |
| | | | G06F H04L G06N |

Le présent rapport a été établi pour toutes les revendications

| Lieu de la recherche | Date d'achèvement de la recherche | Examinateur |
|---|---|---|
| Munich | 21 janvier 2026 | Bichler, Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

Numéro de la demande

EP 26 15 0713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | DAMIEN ALIENOR ET AL: "Implementation of a Host-Based Intrusion Detection System for Avionic Applications", 2019 IEEE 24TH PACIFIC RIM INTERNATIONAL SYMPOSIUM ON DEPENDABLE COMPUTING (PRDC), IEEE, 1 décembre 2019 (2019-12-01), pages 178-17809, XP033687611, DOI: 10.1109/PRDC47002.2019.00048 * abrégé * * Page 178, section "I. Introduction" Pages 179-180, section "II. Related Work" Page 182, section "C. Preprocessing Phase" Page 182, section "D. Training Phase" * ----- | 1-12 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 21 janvier 2026 | Bichler, Marc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 2 de 2

## RÉFÉRENCES CITÉES DANS LA DESCRIPTION

**Documents brevets cités dans la description**

- FR 2412499

**Littérature non-brevet citée dans la description**

- **T. SOWMYA** ; **E.A. MARY ANITA**. *A comprehensive review of AI based intrusion detection system*, 2023